# EUROPÄISCHE PATENTANMELDUNG

(11) **EP 1 369 275 A1**
(43) Veröffentlichungstag der Anmeldung: **10.12.2003**
(21) Anmeldenummer: 03011740.2
(22) Anmeldetag: 23.05.2003
(51) Int. Cl.: B60J 7/00, B60J 1/20, E06B 9/58

(54) **Rollo mit seitlicher Führung**

(30) Priorität: 06.06.2002 DE 10225360
(71) Anmelder: Webasto Vehicle Systems International GmbH, 82131 Stockdorf (DE)
(72) Erfinder: Schultz, Horst-Martin, 81375 München (DE)
(74) Vertreter: Bedenbecker, Markus

(57) **Zusammenfassung**

Die Erfindung betrifft ein Rollo für ein Kraftfahrzeug, mit einer Rollobahn (10), die von einer drehbar angebrachten Wickelspule (30) abwickelbar ist und deren zwei Seitenränder (14, 16) in Rollobahn-Bewegungsrichtung (A) verschiebbar in Führungsschienen geführt sind.

Das erfindungsgemäße Rollo ist dadurch gekennzeichnet, dass die Rollobahn (10) an deren Seitenrändern (14, 16) jeweils mehrere, in Rollobahn-Bewegungsrichtung (A) voneinander beabstandete, im Wesentlichen linienförmig durch die Rollobahn verlaufende Durchbrüche (18) zur Bildung von aus der Rollobahnebene heraus ausstellbaren, zur Rollobahnmitte hin gerichteten Laschen (20) aufweist, wobei Mittel zum Ausstellen der Laschen (20) beim Abwickeln der Rollobahn (10) und zum Zurückstellen der Laschen (20) beim Aufwickeln der Rollobahn (10) vorgesehen sind und wobei die Führungsschienen dazu ausgebildet sind, die Laschen (20) in deren ausgestellten Zustand zu führen, um die Seitenränder (14, 16) der Rollobahn (10) quer zur Rollobahn-Bewegungsrichtung gegen ein Herausziehen aus den Führungsschienen festzulegen.

## Beschreibung

Die vorliegende Erfindung betrifft ein Rollo für ein Kraftfahrzeug, mit einer Rollobahn, die von einer drehbar angebrachten Wickelspule abwickelbar ist und deren zwei Seitenränder in Rollobahn-Bewegungsrichtung verschiebbar in Führungsschienen geführt sind.

Ein derartiges Rollo ist beispielsweise in DE 197 39 919 C2 sowie EP 1 010 559 A1 beschrieben. Bei diesem bekannten Sonnenrollo für ein Kraftfahrzeugdach ist die Rollobahn mit ihren Seitenkanten an seitlich in einer Dachöffnung angebrachten Führungsschienen verschiebbar geführt. Die Führungsschienen und die Seitenkanten der Rollobahn sind so ausgebildet und greifen so miteinander ein, dass sich die Seitenkanten in den Führungsschienen bei Öffnungs- und Schließbewegungen des Sonnenrollos leicht verschieben lassen, jedoch nicht quer zur Rollobahn-Bewegungsrichtung aus den Führungsschienen herausgezogen werden können. Hierfür besitzen die Seitenränder der Rollobahn Randversteifungen, die in einen gegenüber der Ebene der Rollobahn abgewinkelten Führungsbereich eingreifen und so das Herausziehen der Seitenränder aus den Führungsschienen vermeiden. Diese Randversteifungen sind gegenüber der Hauptebene der Rollobahn abknickbar, können jedoch beim Aufwickeln der Rollobahn wieder in ihre gestreckte unabgeknickte Lage zurückgeführt werden.

Ein solches Rollo mit seitlicher Führung, die gegen ein Herausziehen der Seitenränder wirkt, besitzt den Vorteil, dass sich die Rollobahn auch in Querrichtung gut spannen lässt und dass das Rollo mit gekrümmt verlaufenden seitlichen Führungen vorgesehen werden kann. Ein Spalt zu angrenzenden Verkleidungsteilen in einem Fahrzeuginnenraum kann vermieden werden. Wenn das Rollo für ein Fahrzeugdach vorgesehen ist, beispielsweise unter einem Dachöffnungssystem wie einem Schiebedach angeordnet ist, so kann ein Flattern der Rollobahn im Fahrtwind weitgehend vermieden werden.

Nachteilig ist bei dem aus den oben erwähnten Veröffentlichungen bekannten Rollo jedoch der gegenüber einem herkömmlichen Rollo (ohne seitlicher Führung) erhöhte Aufwand zur Bereitstellung von abknickbaren Randversteifungen sowie von abgewinkelten Führungsbereichen der seitlichen Führungen, die dazu geeignet sind, ein Herausziehen der mit Randversteifungen versehenen Rollobahn zuverlässig zu vermeiden.

Es ist eine Aufgabe der vorliegenden Erfindung, ein Rollo der eingangs erwähnten Art bereitzustellen, welches einen einfachen Aufbau besitzt und bei welchem dennoch ein Herausziehen der geführten Seitenränder in Querrichtung zuverlässig vermieden werden kann.

Diese Aufgabe wird gelöst durch ein Rollo mit den Merkmalen des Anspruchs 1. Die abhängigen Ansprüche betreffen vorteilhafte Weiterbildungen der Erfindung.

Das erfindungsgemäße Rollo ist dadurch gekennzeichnet, dass die Rollobahn an deren Seitenrändern jeweils mehrere, in Rollobahn-Bewegungsrichtung voneinander beabstandete, im Wesentlichen linienförmig durch die Rollobahn verlaufende Durchbrüche zur Bildung von aus der Rollobahnebene heraus ausstellbaren, zur Rollobahnmitte hin gerichteten Laschen aufweist, wobei Mittel zum Ausstellen der Laschen beim Abwickeln der Rollobahn und zum Zurückstellen der Laschen beim Aufwickeln der Rollobahn vorgesehen sind und wobei die Führungsschienen dazu ausgebildet sind, die Laschen in deren ausgestellten Zustand zu führen, um die Seitenränder der Rollobahn quer zur Rollobahn-Bewegungsrichtung gegen ein Herausziehen aus den Führungsschienen festzulegen.

Durch die erfindungsgemäße Gestaltung sind die Seitenränder der Rollobahn gegen ein Herausziehen aus den Führungsschienen zuverlässig festgelegt durch Führung von aus der Rollobahnebene heraus ausgestellten, zur Rollobahnmitte hin gerichteten Laschen. Die austellbaren Laschen sind hierbei konstruktiv besonders einfach durch Durchbrüche realisiert, die im Wesentlichen linienförmig durch die Rollobahn verlaufen.

Eine besonders einfache Herstellung der Rollobahn ergibt sich, wenn diese im Wesentlichen aus einem homogenen Material gebildet ist und die Seitenränder der Rollobahn aus diesem Material bestehen. Insbesondere kann die gesamte Rollobahn aus einem einheitlichen Material gebildet sein. Als Rollobahnmaterial eignen sich grundsätzlich alle aufwickelbaren, d.h. zumindest in einer Richtung biegsamen Materialien wie textile Materialien, polymere Kunststoffmaterialien oder Verbundwerkstoffe. Denkbar ist auch die Bildung der Rollobahn aus einzelnen, gelenkig miteinander verbundenen Kunststoff-Lamellen.

Zum Zurückstellen der Laschen beim Aufwickeln der Rollobahn und der Zuverlässigkeit dieser Zurückstellung hat es sich als vorteilhaft herausgestellt, wenn das Material der Seitenränder biegeelastisch ist. Insbesondere kann die gesamte Rollobahn aus einem biegeelastischen Material (z.B. in Form einer Kunststofffolie) gebildet sein. Alternativ könnten im Hinblick auf diesen Vorteil auch lediglich die Seitenränder biegeelastisch vorgesehen sein und der mittlere Bereich biegeschlaff vorgesehen sein. Beispielsweise kann eine Biegeelastizität der Seitenränder in einfacher Weise realisiert sein durch Imprägnierung einer als Textil (z.B. Gewebe) hergestellten Rollobahn an deren Seitenrändern mit einem geeigneten Kunststoff.

Die zur Bildung der Laschen vorgesehenen Durchbrüche können in einfacher Weise als Stanzung ausgebildet sein. Im Hinblick auf eine möglichst geringfügige Schwächung der mechanischen Belastbarkeit der Seitenränder sollte die Breite der im Wesentlichen linienförmigen Durchbrüche möglichst klein sein. Andererseits ist es für ein zuverlässiges Ausstellen und Zurückstellen der Laschen aus bzw. in die Rollobahnebene von Vorteil, wenn die beim Ausstellen und Zurückstellen bewegten (verschwenkten) Laschen nicht in Kontakt mit in der Rollobahnebene verbleibenden Rollobahnabschnitten kommen. Dies lässt sich sicherstellen durch einen gewissen Abstand zwischen den Rändern der Laschen einerseits und den jeweils in der Rollobahnebene verbleibenden Rollobahnabschnitte. Eine "Linienbreite" der Durchbrüche bzw. der Stanzungen in der Größenordnung eines Millimeters erscheint hierfür praktikabel.

Bei der Festlegung der Seitenränder gegen ein Herausziehen aus den Führungen werden die ausgestellten Laschen an deren freien Enden mehr oder weniger druckbelastet. Sowohl zur Erhöhung der durch die Laschen übertragbaren Querkraft als auch zur gleichzeitigen Gewährleistung einer reibungsarmen Verschiebbarkeit der Seitenränder in Rollobahn-Bewegungsrichtung ist es vorteiihaft, wenn das jeweils freie Ende der Laschen zumindest teilweise von einer gerade in Rollobahn-Bewegungsrichtung verlaufenden Laschenkante gebildet wird. Dies ist beispielsweise der Fall bei im Wesentlichen rechteckigen Laschen.

Ebenfalls für einen reibungsarmen Betrieb des Rollos sowie für eine zuverlässige Ausstellung und Rückstellung der Laschen ist es ferner günstig, bei Laschen mit eckigem Laschenrand diese Ecken abgerundet vorzusehen, insbesondere mit einem Rundungsradius in der Größenordnung von 5 % bis 50 % der maximalen Ausdehnung der Laschen. Hinsichtlich einer Optimierung der mit der Erfindung bezweckten Seitenführungseigenschaften unter Berücksichtigung des Wunsches nach geringem Bauraumbedarf für die Seitenführung haben sich Maßnahmen betreffend die Dimensionierung sowie die Anordnung der Laschen als vorteilhaft herausgestellt, wie diese in den Ansprüchen 7 bis 10 angegeben sind.

Was die Gestaltung der Rollobahn anbelangt, so ist schließlich eine bezüglich einer Längsmittelachse der Rollobahn symmetrische Gestaltung von besonderem Vorteil.

Die Mittel zum Ausstellen und Zurückstellen der Laschen sind bevorzugt passive Mittel, d.h. nutzen zum Treiben der Ausstell- bzw. Rückstellbewegung keine aktiven Antriebsmittel sondern nutzen vielmehr die beim Ausstellen bzw. Zurückstellen ohnehin vorhandene Bewegung der Rollobahn in Rollobahn-Bewegungsrichtung. In einer bevorzugten Ausführungsform ist hierzu vorgesehen, dass die Mittel zum Ausstellen und Zurückstellen der Laschen eine Führungsflächenanordnung mit schräg zur Rollobahn-Bewegungsrichtung verlaufenden und zur Anlage an Rollobahnabschnitten vorgesehenen Führungsflächen aufweist, um zum Ausstellen und/oder Zurückstellen der Laschen eine Anlagekraft auf die Laschen und/oder auf seitlich außerhalb der Laschen befindliche Rollobahnabschnitte auszuüben. Die in an sich bekannter Weise (z.B. manuell oder elektromotorisch) getriebene Rollobahnbewegung kann damit vorteilhaft über schräge Führungsflächen die erwünschte Laschenverschwenkung bzw. -verbiegung gewährleisten. Diese Mittel sind bevorzugt in Rollobahn-Bewegungsrichtung der Wickelspule unmittelbar benachbart angeordnet und können wenigstens teilweise vorteilhaft einstückig mit einem Wickelspulen-Lagerrahmen ausgebildet sein oder an diesem befestigt sein.

Das Rollo kann beispielsweise im Bereich eines Fensters (z.B. Seitenfenster oder Heckfenster) oder im Bereich eines Schiebedaches eines Fahrzeugs angeordnet werden. Bei einer Öffnung des entsprechenden Fensters bzw. Daches führen die hervorgerufenen Luft-Turbulenzen im Fahrzeuginnenraum nicht zu einem unerwünschten Flattern der Rollobahn. Die erfindungsgemäße Gestaltung erfordert für die seitliche Führung nicht zwingend zusätzliche Bauteile oder eine Aufdickung des Rollobahnmaterials (z.B. Stoffbahn). Diese für bekannte Seitenführungen notwendigen Maßnahmen verursachen Kosten und machen die Montage aufwendig.

Die Erfindung wird nachfolgend anhand von Ausführungsbeispielen mit Bezug auf die beigefügten Zeichnungen näher erläutert. Es stellen dar:
- Figur 1: eine perspektivische Ansicht einer teilweise von einer Wickelspule abgewickelten Rollobahn,
- Figur 2: einen Schnitt längs der Linie ll-ll in Figur 1, wobei abweichend von Figur 1 die im Schnitt sichtbare Lasche sich im ausgestellten Zustand befindet,
- Figur 3a bis 3d: Draufsichten eines dem in Figur 1 gestrichelt eingezeichneten Bereich III entsprechenden Bereichs an einem Seitenrand einer Rollobahn zur Veranschaulichung von vier Modifikationen hinsichtlich der Form einer Lasche,
- Figur 4a bis 4e: in dieser Reihenfolge Schnittansichten eines Rollos mit zur Rollobahnebene orthogonalen Schnittebenen ausgehend von einem Schnitt in unmittelbarer Nähe der Wickelspule (Figur 4a) bis zum Beginn einer Führungsschiene, welche die Laschen in deren ausgestellten Zustand führt (Figur 4e), und
- Figur 5a und 5b: Schnittansichten entsprechend den Figuren 4a und 4b in einer modifizierten Ausführungsform.

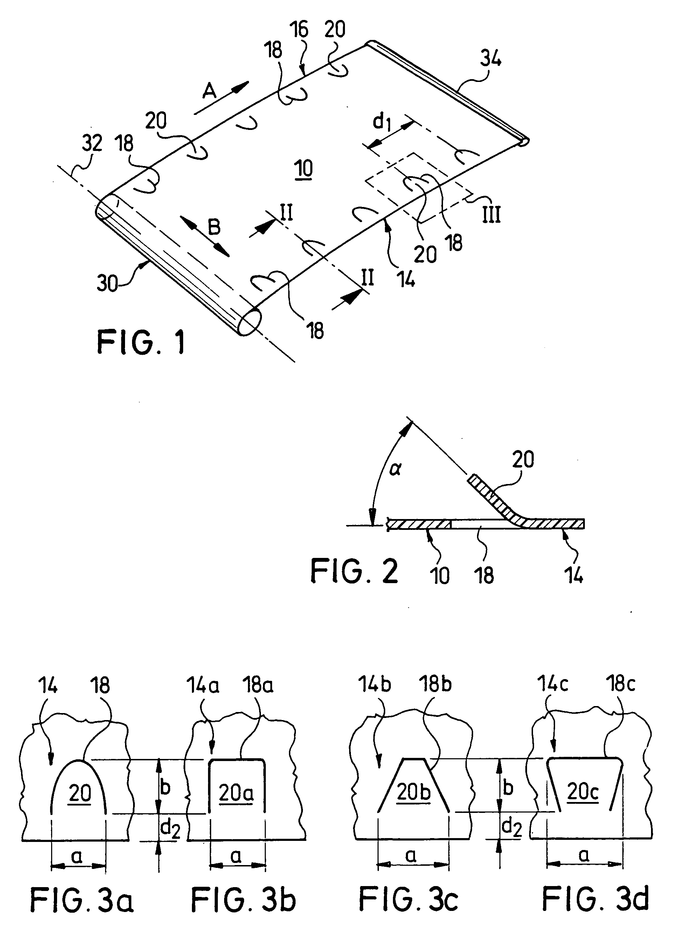

Figur 1 zeigt eine für ein erfindungsgemäßes Rollo geeignete Rollobahn 10 zusammen mit einer um eine Drehachse 32 drehbaren Wickelspule 30, von der die Rollobahn (zum Schließen des Rollos) in Richtung des Pfeils A abwickelbar ist.

Ein Zugspriegel 34 am vorderen Rand der Rollobahn 10 kann in herkömmlicher Weise zum Ziehen der Rollobahn 10 von der Wickelspule 30 verwendet werden, wobei die Aufwicklung der Rollobahn 10 ebenfalls in herkömmlicher Weise z.B. durch einen an oder in der Wickelspule 30 angeordneten Federmotor getrieben sein kann. Der Antrieb der Rollobahn zum Öffnen und Schließen des Rollos sowie etwaig vorgesehene Mittel zur Positionierung des Rollos im geöffneten, im geschlossenen oder in einem Zwischenzustand sind jedoch nicht Gegenstand der vorliegenden Erfindung und können für den jeweiligen Anwendungsfall geeignet und in an sich bekannter Weise vorgesehen sein.

Die Rollobahn 10 besitzt zwei Seitenränder 14 und 16, welche in unten noch beschriebener Weise in Rollobahn-Bewegungsrichtung A verschiebbar derart geführt sind, dass insbesondere eine Spannung der Rollobahn 10 in einer Querrichtung B zu Stande gebracht werden kann.

Die Rollobahn 10 weist an deren Seitenrändern 14, 16 jeweils mehrere, in Rollobahn-Bewegungsrichtung A voneinander beabstandete, linienförmig durch die Rollobahn 10 verlaufende Stanzungen auf, von denen einige in Figur 1 mit 18 bezeichnet sind. Im dargestellten Ausführungsbeispiel ist an jedem der Seitenränder 14, 16 eine in Rollobahn-Bewegungsrichtung A sich erstreckende Reihe von Stanzungen 18 vorgesehen, in welcher die Stanzungen äquidistant angeordnet sind. Die Stanzungen 18 verlaufen gekrümmt durch die aus biegeelastischem Kunststoff hergestellte Rollobahn 10, wobei zur Rollobahnmitte hin gerichtete Laschen 20 gebildet sind, die aus der Ebene der Rollobahn 10 heraus ausstellbar sind.

Figur 2 zeigt den Schnitt durch einen Rollobahnabschnitt längs der Linie II-II in Figur 1, wobei die in diesem Bereich geschnittene Lasche 20 im ausgestellten Zustand dargestellt ist und α den Winkel bezeichnet, den die Lasche mit der Rollobahnebene einschließt.

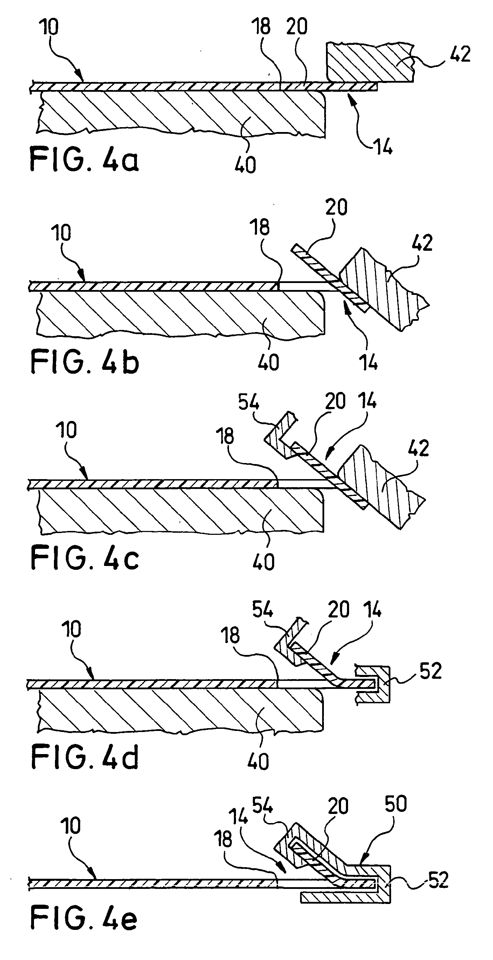

Figur 3a zeigt eine Draufsicht des in Figur 1 mit III bezeichneten Bereichs des Seitenrands 14. Ersichtlich ist hieraus ein gekrümmter Verlauf der Stanzlinie 18 über deren gesamte Länge und die somit im Wesentlichen halbrunde Form der gebildeten Lasche 20.

Bei der nachfolgenden Beschreibung von weiteren Ausführungsbeispielen werden für analoge Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

Die Figuren 3b, 3c und 3d zeigen alternative Ausführungsformen von Laschen 20a, 20b und 20c. Hieraus ist ersichtlich, dass bei der Formgebung der Laschen eine große Gestaltungsfreiheit besteht und diese Laschen somit jeweils geeignet für bestimmte seitliche Führungen der Rollobahn angepasst werden können. In den Figuren 1 und 3 sind für eine besonders vorteilhafte Rollokonstruktion zu berücksichtende Abmessungsparameter angegeben, nämlich die gegenseitige Distanz d1 bei äquidistant angeordneten Laschen (Figur 1), die Längsausdehnung a der Laschen, die Querausdehnung b der Laschen sowie der Abstand d2 der Laschen von der betreffenden Seitenkante der Rollobahn (Figur 3).

Die Figuren 4a bis 4e veranschaulichen ein Ausführungsbeispiel von Mitteln zum Ausstellen und Zurückstellen der Laschen abhängig von dem Bewegungszustand der verwendeten Rollobahn, bei der es sich in diesem Ausführungsbeispiel um die mit Bezug auf Figur 1 bereits beschriebene Rollobahn 10 handelt. Die mit den Figuren 4a bis 4e dargestellten Schnitte verlaufen ortsfest zu der Rollobahn 10 längs der Linie ll-ll in Figur 1 im Verlauf der Bewegung ein und derselben Lasche 20 beim Abwickeln der Rollobahn 10 von der Wickelspule 30.

Figur 4a zeigt die soeben von der Wickelspule 30 abgewickelte Lasche 20 im nichtausgestellten, d.h. im in Rollobahnebene sich erstreckenden Zustand. In diesem Bereich wird die Rollobahn 10 in deren in Querrichtung B mittleren Bereich an der Unterseite durch eine erste Führungsleiste 40 unterstützt, die sich seitlich bis in den Bereich der Stanzung 18 hinein erstreckt. An der Oberseite des seitlich äußersten Bereichs des Rollobahn-Seitenrands 14 wird die Rollobahn 10 durch eine zweite Führungsleiste 42 unterstützt, deren Querschnitt sich mit zunehmenden Abstand von der Wickelspule 30 derart neigt, wie dies in den Figuren 4b und 4c dargestellt ist. Diese zweite Führungsleiste 42 besitzt somit eine an der Oberseite der Rollobahn 10 anliegende Führungsfläche, welche schräg zur Rollobahn-Bewegungsrichtung verläuft und im Zusammenwirken mit der in diesem Bewegungsbereich (Figuren 4a bis 4c) im Querschnitt unveränderten ersten Führungsleiste 40 eine nach unten gerichtete Anlagekraft auf den seitlich außerhalb der Lasche 20 befindlichen Rollobahnabscnnin (Seitenkante) ausübt.

Diese Anlagekraft drängt die Lasche 20 zu einer Verschwenkung nach oben in einen ausgestellten Zustand, wie dieser in den Figuren 4b und 4c ersichtlich ist.

Im weiteren Verlauf der Rollobahnbewegung, wie dieser in den Figuren 4c, 4d und 4e dargestellt ist, erfolgt der Übergang von den Ausstell- und Rückstellmitteln, hier gebildet durch die Führungsleisten 40 und 42, zu einer einstückig ausgebildeten Führungsschiene 50 (Figur 4e), welche den Seitenrand 14 führt. Im dargestellten Beispiel dieser Führungsschiene 50 besitzt diese einen (optionalen) äußeren Führungsbereich 52 zur Führung der äußeren Rollobahnkante sowie einen inneren Führungsbereich 54 zum Führen zumindest des freien Endes der Lasche 20 (hier: der gesamten Lasche 20). Vor dem in Figur 4e dargestellten Beginn der eigentlichen Seitenführung durch die Führungsschiene 50 wird das freie Ende der Lasche 20 bereits im Zustand gemäß Figur 4c von einem "Ausläufer" des inneren Führungsbereichs 54 im ausgestellten Zustand festgelegt, wobei dieser Ausläufer beispielsweise ein einstückig sich an den inneren Führungsbereich 54 der Führungsschiene anschließendes Teil sein kann. In analoger Weise wird der äußere Seitenrand der Rollobahn 10 im Zustand gemäß Figur 4d (alternativ auch schon vorher) von einem einstückig ausgebildeten Ausläufer des äußeren Führungsbereichs 52 der Führungsschiene 50 "ergriffen" und geführt. Im weiteren Verlauf der Führungsschiene 50 in Rollobahn-Bewegungsrichtung A bleibt der Querschnitt der Führungsschiene 50 wie in Figur 4e dargestellt, wobei sich diese Führungsschiene 50 selbstverständlich auch gekrümmt erstrecken kann, um z.B. den Rollobahnverlauf an bauliche Gegebenheiten im Innenraum eines Kraftfahrzeugs anzupassen.

Zusammenfassend erfolgt bei diesem Ausführungsbeispiel das Ausstellen der Laschen 20 durch passive Mittel, die bei der Abwickelbewegung der Rollobahn eine der Ausstellrichtung entgegengesetzte Kraft auf die Rollobahnseitenkante ausüben. Die Rückstellung der Laschen 20 erfolgt in diesem Beispiel getrieben durch die Biegeelastizität des Rollobahnmaterials im Bereich von deren Seitenrand und kontrolliert durch dieselben Mittel (vergleiche hierzu Figuren 4b und 4a). Für den Fall, dass der Seitenrand 14 nicht biegeelastisch ist, so kann durch eine Modifikation der von den Führungsleisten 40, 42 bereitgestellten Schrägflächen eine zwangsweise und ebenfalls passive Zurückstellung erreicht werden. Beispielsweise könnte sich die zweite Führungsleiste 42 im Bereich der Figuren 4a und 4b nach innen weiter bis in den Bereich der Lasche 20 erstrecken und somit beim Aufwickeln der Rollobahn 10 die Oberseite der Lasche 20 nach unten in die Rollobahnebene drücken.

Bei diesem Ausführungsbeispiel ist das Rollobahnmaterial seitlich derart gestanzt, dass Laschen entstehen, die beim Schließen des Rollos mit Hilfe einer speziellen Vorrichtung aufgestellt und in eine Führung gefädelt werden. Insbesondere bei einem relativ steifen Rollobahnmaterial und bei einer größeren Anzahl von Austanzungen kann eine besonders gute seitliche Führung erreicht werden und somit insbesondere eine Querspannung in das Rollobahnmaterial eingebracht werden, die vor allem bei großflächigen Rollos den optischen Eindruck verbessert. Auch kann das Rollo in der Längswölbung der Fahrzeugkontur angepasst werden.

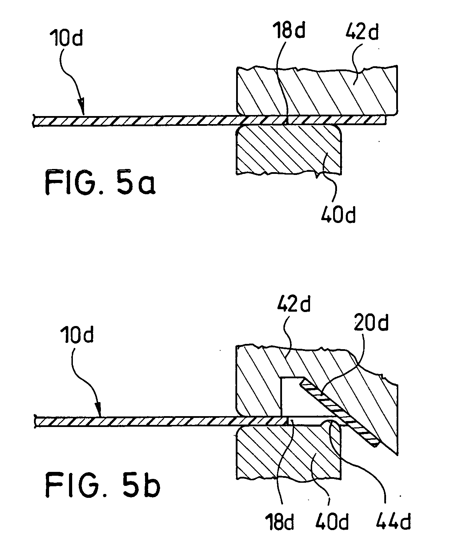

Die Figuren 5a und 5b sind den Figuren 4a und 4b entsprechende Ansichten einer modifizierten Ausführungsform der Ausstell- und Rückstellmittel zum Ausschwenken und Einschwenken von Laschen 20d einer Rollobahn 10d. Im Unterschied zu der vorausgehend beschriebenen Ausführungsform wirkt die von den ersten und zweiten Führungsleisten 40d, 42d geschaffene Führungsflächenanordnung beim Abwickeln der Rollobahn 10d sowohl für eine nach unten gerichtete Anlagekraft auf die Rollobahn-Seitenkante als auch für eine nach oben gerichtete Anlagekraft auf die Lasche 20d. Die unmittelbar auf die Lasche 20d ausgeübte Ausstellkraft wird hierbei durch einen von der Anlagefläche der ersten Führungsleiste 40d nach oben vorstehenden Führungshöcker 44d bewerkstelligt, durch welchen die Lasche 20d in einen zumindest teilweise ausgestellten Zustand ausgeschwenkt wird. Der in Figur 5 nicht dargestellte weitere Verlauf in Rollobahn-Bewegungsrichtung A kann beispielsweise im Wesentlichen der Gestaltung gemäß den Figuren 4c bis 4e entsprechen.

Jedenfalls gewährleistet die seitliche Führung der ausgestellten, zur Rollobahnmitte hin gerichteten Laschen durch die Führungsschiene, dass die Seitenränder der Rollobahn nicht aus den Führungsschienen herausgezogen werden können und insbesondere dass der Rollobahn eine Querspannung verliehen werden kann.

### Bezugszeichenliste

- 10: Rollobahn
- 14: Seitenrand
- 16: Seitenrand
- 18: Stanzungen
- 20: Laschen
- 30: Wickelspule
- 32: Drehachse
- 34: Zugspriegel
- 40: 1. Führungsleiste
- 42: 2. Führungsleiste
- 50: Führungsschiene
- 52: äußerer Führungsbereich
- 54: innerer Führungsbereich

## Patentansprüche

1. Rollo für ein Kraftfahrzeug, mit einer Rollobahn (10), die von einer drehbar angebrachten Wickelspule (30) abwickelbar ist und deren zwei Seitenränder (14, 16) in Rollobahn-Bewegungsrichtung (A) verschiebbar in Führungsschienen geführt sind,
**dadurch gekennzeichnet, dass** die Rollobahn (10) an deren Seitenrändern (14, 16) jeweils mehrere, in Rollobahn-Bewegungsrichtung (A) voneinander beabstandete, im Wesentlichen linienförmig durch die Rollobahn verlaufende Durchbrüche (18) zur Bildung von aus der Rollobahnebene heraus ausstellbaren, zur Rollobahnmitte hin gerichteten Laschen (20) aufweist, wobei Mittel zum Ausstellen der Laschen (20) beim Abwickeln der Rollobahn (10) und zum Zurückstellen der Laschen (20) beim Aufwickeln der Rollobahn (10) vorgesehen sind und wobei die Führungsschienen dazu ausgebildet sind, die Laschen (20) in deren ausgestellten Zustand zu führen, um die Seitenränder (14, 16) der Rollobahn (10) quer zur Rollobahn-Bewegungsrichtung gegen ein Herausziehen aus den Führungsschienen festzulegen.

2. Rollo nach Anspruch 1, wobei die Rollobahn (10) im Wesentlichen aus einem homogenen Material gebildet ist und die Seitenränder (14, 16) der Rollobahn aus diesem Material bestehen.

3. Rollo nach Anspruch 2, wobei das Material der Seitenränder (14, 16) biegeelastisch ist.

4. Rollo nach Anspruch 1, 2 oder 3, wobei die Durchbrüche (18) als Stanzung ausgebildet sind.

5. Rollo nach einem der Ansprüche 1 bis 4, wobei das jeweils freie Ende der Laschen (20) zumindest teilweise von einer gerade in Rollobahn-Bewegungsrichtung (A) verlaufenden Laschenkante gebildet wird.

6. Rollo nach einem der Ansprüche 1 bis 5, wobei die Laschen (20) im Wesentlichen rechteckig sind,

7. Rollo nach einem der Ansprüche 1 bis 6, wobei das Verhältnis von Querausdehnung (b) zu Längsausdehnung (a) der Laschen (20) im Bereich von 0,5 bis 2 liegt.

8. Rollo nach einem der Ansprüche 1 bis 7, wobei die Laschen (20) in Rollobahn-Bewegungsrichtung (A) äquidistant angeordnet sind und das Verhältnis von gegenseitiger Distanz (d1) zu Längsausdehnung (a) der Laschen (20) im Bereich von 1,5 bis 5 liegt.

9. Rollo nach einem der Ansprüche 1 bis 8, wobei das Verhältnis von Abstand (d2) der Laschen (20) von der Seitenkante der Rollobahn (10) zu Querausdehnung (b) der Laschen (20) im Bereich von 0,2 bis 1 liegt.

10. Rollo nach einem der Ansprüche 1 bis 9, wobei die Laschen (20) im ausgestellten Zustand einen Winkel (α) von höchstens 60° mit der Rollobahnebene einschließen.

11. Rollo nach einem der Ansprüche 1 bis 10, wobei die Mittel (40, 42) zum Ausstellen und Zurückstellen der Laschen (20) eine Führungsflächenanordnung mit schräg zur Rollobahn-Bewegungsrichtung (A) verlaufenden und zur Anlage an Rollobahnabschnitten vorgesehenen Führungsflächen aufweist, um zum Ausstellen und/oder Zurückstellen der Laschen (20) eine Anlagekraft auf die Laschen (20) und/oder auf seitlich außerhalb der Laschen befindliche Rollobahnabschnitte auszuüben.

12. Rollo nach einem der Ansprüche 1 bis 11, wobei die Führungsschienen gekrümmt verlaufen.
